Europäisches Patentamt

European Patent Office

Office européen des brevets

(11) Publication number: **0 402 943 B1**

# EUROPEAN PATENT SPECIFICATION

(45) Date of publication of patent specification: **01.03.95**   (51) Int. Cl.⁶: **C09D 5/29**

(21) Application number: **90111355.5**

(22) Date of filing: **15.06.90**

(54) **Paint composition and coating product.**

(30) Priority: **15.06.89 JP 153027/89**

(43) Date of publication of application:
**19.12.90 Bulletin 90/51**

(45) Publication of the grant of the patent:
**01.03.95 Bulletin 95/09**

(84) Designated Contracting States:
**DE FR GB NL SE**

(56) References cited:
**EP-A- 0 388 931**
**EP-A- 0 388 932**
**DE-A- 3 306 400**

(73) Proprietor: **NIPPON PAINT CO., LTD.**
**2-1-2, Oyodokita**
**Kita-ku**
**Osaka-shi**
**Osaka 530 (JP)**

(72) Inventor: **Arima, Masamichi**
**2-13-8 Yakushigaoka,**
**Saeki-ku**
**Hiroshima-shi,**
**Jiroshima (JP)**
Inventor: **Yoneda, Yoshiyuki**
**301, 8-20 Ujina Kanda 5-chome,**
**Minami-ku**
**Hiroshima-shi,**
**Hiroshima (JP)**
Inventor: **Masuno, Tetsuo**
**11-16, Misako 1-chome,**
**Kaito-cho**
**Aki-gun,**
**Hiroshima (JP)**

(74) Representative: **Glawe, Delfs, Moll & Partner**
**Patentanwälte**
**Postfach 26 01 62**
**D-80058 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

### BACKGROUND OF THE INVENTION

The present invention relates to a paint composition and a coating product.

There is a paint composition which contains a lustreless color pigment and a scaly brilliant color pigment. When a coating film is made by using this paint composition, a design effect is displayed due to a gloss action of the brilliant pigment. More concretely, there is a paint composition in which an blue-interfering mica ( a scaly brilliant color pigment ) is in combined use with a lustreless blue pigment.

However, since displaying of higher design effects is recently desired in various kinds of coating products ( for example, automobile ), said paint composition has difficulty in sufficiently responding to the desire.

A paint composition according to the preamble of claim 1 is disclosed in DE-A-33 06 400. In this composition the scaly brilliant color pigment is a scaly copper phthalocyanine pigment of $\beta$-modification. The scaly CuPc-pigment is combined with other non-brilliant or brilliant pigments. The aforementioned scaly CuPc-pigment does not have a definite color by itself but has the effect of changing color with varying angle of vision.

### SUMMARY OF THE INVENTION

According to these circumstances, the first object of the present invention is to provide a paint composition capable of forming a coating film, in which both a gloss action of the scaly brilliant color pigment and a color action of the lustreless color pigment are sufficiently displayed, a wide variety of color tones amd hues are seen, and high design performance is thus exhibited. The second object is to provide a coating product, wherein a coating film sufficiently displaying both the gloss action of the scaly brilliant color pigment and the color action of the lustreless color pigment, showing a wide variety of color tones and hues, and thus exhibiting high design performance is formed on the substrate material surface.

These objects are achieved by a paint composition as claimed in claim 1 and by a coated product as claimed in claim 5, respectively; the dependent claims are related to further developments of the invention.

### BRIEF DESCRIPTION OF THE DRAWINGS

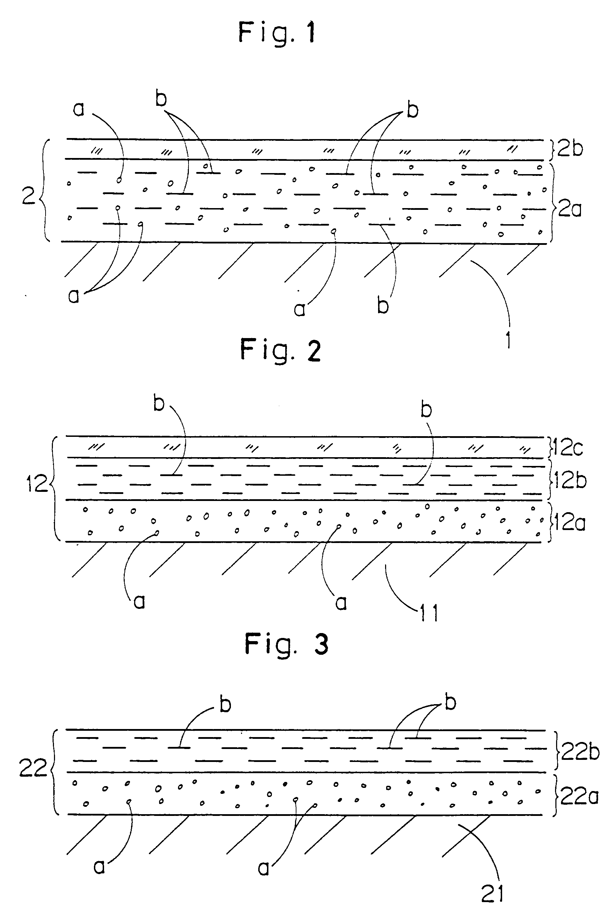

Figs. 1, 2, and 3 are typical section views showing construction of the examples of coating products as claimed in the claim 5.

### DESCRIPTION OF THE INVENTION

For the paint composition as claimed in the claim 1, there are combined not only the lustreless color pigment and the scaly brilliant color pigment, but also resins, additives, solvents and so on, which are properly selected and usually contained in a paint in proper quantity.

As a scaly brilliant color pigment used in this invention are cited a color-interfering mica powder, a colored mica powder, a colored aluminum powder, a colored bronze powder, and a colored stainless-steel powder. These pigments are scaly particles having a diameter in a range of 4 to 50 $\mu$m.

The color-interfering mica is covered on the surface of mica slices with titanium dioxide of large refractive index and shows a brilliance which is in a region of yellow to green depending upon the thickness of titanium dioxide. This color-interfering mica is produced as followed. At first, fine mica-slices are suspended in water, in which titanium sulfate or titanium tetrachloride is hydrolyzed, and thus-formed fine particles of titanium dioxide hydrate is attached on the surface of mica slices. Washing and drying followed by baking at a temperature of 800 to 900 °C form a thin film of titanium dioxide, which means completion of the color-interfering mica. Besides, there is a color-interfering mica in which the surface of titanium dioxide is further covered with iron oxide and thus a brilliance being in a region of gold to red-copper color is exhibited.

The colored mica is the one, in which the surface of mica slices is covered with a colorant, for example, iron oxide, and the one showing a brilliance which is in a region of red to bronze color is exemplified.

For the colored aluminum powder, the colored bronze powder, and the colored stainless-steel powder, the ones are exemplified in which the respective metal slices are colored by a usual pigment, for example, a pigment in a group of quinacridone, one in a group of perylene, one in a group of phthalocyanine, one in a group of indanthrone, and one in a group of iron oxide.

As the lustreless color pigment used in this invention is exemplified a pigment which is used for a paint composition for coating an automobile body. Practically, there are Cyanine Blue-G • 500 N, Cyanine Blue-G • 314, Cyanine Blue-MR-3, Cinquasia Gold YT-915 D, Irgazin Yellow 2RLT/3R, Paliotol Yellow 2140HD, Sicotrans Yellow L-1916, Degussa Carbon FW • 200B, Lionogen Red YF, Cinquasia Magenta B-RT-343D, Perrindo Maroon R • 6424/R • 6436, Paliogen Maroon 3920, Transparent Iron Oxide Red 30-1005, Irgazin Red DPP-BO, Lionol Green 6YKP-N, Fastogen Blue 6020, Paliogen Blue L-6480, and so on. Usually, the pigments having an average particle diameter of about 0.03 to 0.3 $\mu$m are used. There is a case of that plural pigments are in combined use. For example, to adjust a color tone a black color pigment such as Degussa Carbon FW • 200 B may be properly used in combination with the lustreless yellow, blue, or red pigment.

Total contents of the lustreless color pigment and the scaly brilliant color pigment prefers to be in a range of 1.1 to 65 weight parts against 100 weight parts of the solid portion of a paint composition ( or a coating film ) and more prefers to be in a range of 2 to 40 weight parts. If the contents exceeds the 65 weight parts, sufficient coating film gloss and weather resistance are difficult to get. If those are below the 1.1 weight parts, sufficient hiding is difficult to get.

Referring to the contents of only the lustreless color pigment, a range of 1 to 40 weight parts against 100 weight parts of a solid portion of the paint composition ( or coating film ) is preferred and furthermore, not to exceed the 30 weight parts is more preferred. If the contents exceeds the 40 weight parts, sufficient gloss and weather resistance are difficult to get. If those are belower than 1 weight part, sufficient coloring and hiding are difficult to get.

Referring to the contents of only the scaly brilliant color pigment, a range of 0.1 to 25 weight parts against 100 weight parts of a solid portion of the paint composition is preferred and furthermore, a range of 1 to 20 weight parts is more preferred. If the contents exceed the 25 weight parts, sufficient gloss and weather resistance are difficult to get. If those are belower than the 0.1 weight part, sufficient gloss is difficult to get.

The lustreless color pigment and the scaly brilliant color pigment are not in the similar color relation ( are not in similar hues ). The "not similar colors" means, for example, at least two different colors selected from the group of red, yellow, green and blue. In this case, combination of both the pigments in a complementary color relation or a nearly complementary color is preferred, because the color difference between both the pigments are obviously recognized. Examples of the color combination of both the pigments are shown below. Needless to say, there is as the brilliant color pigments a gold one ( the gold color may be regarded as a brilliant color in a yellow system).

In a case of that the lustreless color is red, the brilliant color is green.

In a case of that the lustreless color is blue, the brilliant color is yellow.

In a case of that the lustreless color is yellow, the brilliant color is blue.

In a case of that the lustreless color is green, the brilliant color is red.

The scaly brilliant color pigment in the present invention does not include a scaly brilliant white-color pigment ( a scaly brilliant uncolored pigment ). In a case where a brilliant white pigment is used, unevenness in a coating film causes color tone variation which always appears on the coating film surface. The uneven parts are seen as a different tone and so, become unsightly. It is very difficult to make a coating film of uniform thickness, with which the enevenness effect does not appear and, therefore, there is indeed no practical use in a case of that the scaly brilliant pigment shows a white brilliant color.

The coating product as claimed in the claim 5 is practically, for example, composed as shown in Figs. 1, 2 and 3.

The coating product as shown in Fig. 1 is settled with a coating film 2 on a substate material 1. The coating film 2 is consisting of a paint layer 2a containing both the lustreless color pigment a and the scaly brilliant color pigment b as well as a clear layer ( a transparent layer ) 2b. The paint layer 2a is composed of a paint compositon as claimed in the claim 1.

The coating product as shown in Fig. 2 is settled with a coating film 12 consisting of three paint layers 12a, 12b, and 12c on a substrate material 11. The paint layers 12a, 12b, and 12c are formed making layers in sequence from the lowest layer, the paint layer 12a contains the lustreless color pigment a, the paint layer 12b contains the scaly brilliant color pigment b, and the paint layer 12c is a clear layer.

The coating product as shown in Fig. 3 is settled with a coating film 22 consisting of two paint layers 22a and 22b on a substrate material 21. The paint layer 22a contains the lustreless color pigment a. The paint layer 22b contains the scaly brilliant pigment b and this paint layer 22b is a clear layer.

Like this, in the coating product as claimed in the claim 5, there is not only a case in which the lustreless color paint and the scaly brilliant color paint are both contained in the same paint layer, but also a case in which the respective color paints are separately contained in a different layer. Also, the coating film may have a under coating and an intermediate coating under the layers 2a, 12a, and 22a.

As the coating product, for example, an automobile body may be cited and the coating film formation for this automobile body is performed as follows.

① A dull steel plate, which is a substrate material, for example, is treated with a zinc phosphate-treating agent ( for example, Granodine SD • 5000, made by Nippon Paint Co., Ltd. ).

② After surface-treatment is carried out, a under coating layer is formed on a substrate material with cationic electrocoating and, for example, by coating a paint composition in a group of epoxyurethane cationic resins ( Power Top u-30, made by Nippon Paint Co., Ltd. ).

③ Subsequently, an intermediate coating layer is formed making layers, for example, by coating a paint composition in a group of polyester melamine resins ( for example, Orga TO 4820 Grey, made by Nippon Paint Co., Ltd. ).

④ On the intermediate coating layer is formed, making layers, a coating film containing components of a lustreless color pigment and a scaly brilliant color pigment in a group of non-similar color, for example, by using a paint composition as claimed in the claim 1.

⑤ Finally, a clear layer is formed making layers, for example, by coating a paint composition in a group of acryl melamine resins ( Orga TO 4561 Clear, made by Nippon Paint Co., Ltd. ).

In a case of that the scaly brilliant color pigment and the lustreless color pigment are not similar colors, the color gloss of the brilliant color pigment is prominent well and the gloss action is remarkable. In previous cases, the scaly brilliant color pigment and the lustreless color pigment are similar colors, so that the color gloss of the brilliant color pigment is overlapped with a color of the lustreless color pigment and is not so prominent.

Since the gloss extent ( a gloss strength ) of the scaly brilliant color pigment varies with an angle of looking-at and the color gloss becomes prominent than before as stated above, for example, delicate variation of the gloss which depends upon an inclining extent of the coated face can be sufficiently recognized. As a result, that the color tone varies in a variety of mode depending upon inclining of the coated face ( depending upon an angle of looking-at ) can be recognized well.

In a condition of that the color gloss extent of the scaly brilliant color pigment is great, the color of the scaly brilliant color pigment is overwhelming on the coating film face, and in a condition of that the gloss extent of the scaly brilliant color pigment is small, the color of the lustreless color pigment is overwhelming on the coating film face. Because of this, not only the color tone but also the hue vary with variation of the gloss extent on the coating film face. For example, in a case of a coating film of wide area the down and upper parts have different angles to look at. As the result, there is seen a condition of that in the down part the brilliant color is overwhelming because of the strong gloss action while in the upper part the lustreless color is overwhelming because of the weak gloss action. The scaly brilliant color pigment and the lustreless color pigment are not similar colors. Therefore, there coexist different hues on a face of coating films.

Accordingly, a high design effect hitherto unreported is expectable with a coating product of the present invention in which the color tone varies in a variety of mode and the different hues coexist.

At first in the pages that follow, are explained the examples for the preparation of the paint composition as claimed in the claim 1 and the paint composition for comparison.

- Preparation of paint composition 1 -

Preparation of first pigment solution

In a paint shaker were placed 3.9 weight parts of a pigment in an indanthrene blue series ( Monolight Blue-3R, made by ICI ), 24.8 weight parts of an acryl resin ( Arumatex NT-u-64, a resin solid portion 50 weight %, made by Mitsui Toatsu Kagaku Co., Ltd. ), and 17.2 weight parts of toluene and the mixture obtained was dispersed by glass beads, then to this dispersed paste were added 37.4 weight parts of an acryl resin ( Arumatex NT-u-64, a reisn solid portion 50 weight %, made by Mitsui Toatsu Kagaku Co., Ltd. ), 12.9 weight parts of a melamine resin ( Yuban 20SE-60, a resin solid portion 60 weight %, made by Mitsui Toatsu Kagaku Co., Ltd. ), and 3.8 weight parts of toluene and the mixture obtained was stirred with a disper for 30 minutes to get the first pigment solution.

Preparation of second pigment solution

The scaly brilliant color pigment ( Exteria Marine Bright Gold, made by Maar Corporation ), 13.4 weight parts, were mixed with 53.8 weight parts of toluene and to the mixure obtained were added 27.2 weight parts of an acryl resin ( Arumatex NT-u-64, made by Mitsui Toatsu Kagaku Co., Ltd. ) and 5.6 weight parts of a melamine resin ( Yuban 20SE-60, made by Mitsui Toatsu Kagaku Co., Ltd. ), and the mixture obtained was stirred with a disper for 30 minutes to get the second pigment solution. By the way, the Exteria Marine Bright Gold used here is a pigment exhibiting a brilliant color of gold ( yellow ) and has a particle diameter of about 6 to 48 $\mu$m and is obtainable by coating titanium dioxide on mica slices.

Mixing of pigment solutions

To 71.7 weight parts of said first pigment solution was added 28.3 weight parts of the second pigment solution and the mixture obtained was stirred with a disper for 30 minutes to get a paint composition 1.

- Preparation of paint composition 2 -

The procedure of said preparation of the paint composition 1 was repeated except that, as a lustreless color pigment, a green pigment in a group of phthalocyanine ( Rionol Green 6YKP-N, made by Toyo Ink Manufactureing Co., Ltd. ) was used and, as a scaly brilliant color pigment, Exteria Marine Highlight Red ( made by Maar Corporation ) was used, whereby a paint composition 2 was obtained. Besides, the Exteria Marine Highlight Red is a pigment exhibiting a brilliant color of red and has a particle diameter of about 6 to 48 $\mu$m and is obtainable by coating titanium dioxide on mica slices.

- Preparation of paint composition 3 -

The procedure of said preparation of the paint composition 1 was repeated except that, as a lustreless color pigment, a pigment in a group of phthalocyanine blue ( Cyanine Blue G-314, made by Sanyo Shikiso Co., Ltd. ) was used, whereby a paint composition 3 was obtained.

- Preparation of paint composition for comparison -

The procedure of said preparation of the paint composition 1 was repeated except that, as a scaly brilliant color pigment, Exteria Marine Highlight Blue ( made by Maar Corporation ) was used, whereby a paint composition for comparison was obtained. Besides, the Exteria Marine Highlight Blue is a pigment exhibiting a brilliant color of blue and has a particle diameter of about 6 to 48 $\mu$m and is obtainable by coating titanium dioxide on mica slices.

Combination proportions of each component in the paint compositions 1, 2, and 3 and the paint composition for comparison are presented in Table 1.

Table 1

| | | Paint composition 1 | Paint composition 2 | Paint composition 3 | Paint composition for comparison |
|---|---|---|---|---|---|
| Lustreless color pigment | Indanthrene blue ( weight parts ) | 2.8 | — | — | 2.8 |
| | Phthalocyanine green ( weight parts ) | — | 2.8 | — | — |
| | Phthalocyanine blue ( weight parts ) | — | — | 2.8 | — |
| Scaly brilliant color pigment (Interfering mica pigment) | Exteria marine bright gold ( weight parts ) | 3.8 | — | 3.8 | — |
| | Exteria marine highlight red ( weight parts ) | — | 3.8 | — | — |
| | Exteria marine highlight blue ( weight parts ) | — | — | — | 3.8 |
| Toluene ( weight parts ) | | 30.3 | 30.3 | 30.3 | 30.3 |
| Acryl resin varnish of heat-curing type ( weight parts ) | | 52.3 | 52.3 | 52.3 | 52.3 |
| Melamine resin varnish ( weight parts ) | | 10.8 | 10.8 | 10.8 | 10.8 |
| Total ( weight parts ) | | 100.0 | 100.0 | 100.0 | 100.0 |
| Amount of total pigments against 100 weight parts of resin solid portion | | 20.2 PHR | 20.2 PHR | 20.2 PHR | 20.2 PHR |
| Amount of lustreless pigment against 100 weight parts of resin solid portion | | 8.6 PHR | 8.6 PHR | 8.6 PHR | 8.6 PHR |
| Amount of brilliant pigment against 100 weight parts of resin solid portion | | 11.6 PHR | 11.6 PHR | 11.6 PHR | 11.6 PHR |

Next, the coating products as claimed in the claim 5 and the coating product for comparison were produced by using said paint compositions.

Example A

At first, pre-coating and intermediate coating were carried out for a substrate material as described below. An art metal ( 500 mm of length, 300 mm of width, and 0.8 mm of thickness ), which is a substrate material, was pretreated on the surface as usual with a zinc phosphate-treating agent ( Granodine SD 5000, made by Nippon Paint Co. , Ltd. ) and electrocoated as usual with a cationic electrocoating paint ( Power Top-u-30 in a group of epoxyurethane resins, made by Nippon Paint Co., Ltd. ), whereby a electrocoated paint film ( a under coating layer ) having a dried film of 20 μm thickness is formed. Next, a paint for intermediate coating ( Orga TO4820 Grey in a group of polyester-melamine resins, made by Nippon Paint Co. , Ltd. ) was applied as usual, whereby an intermediate layer having a dried film of 35 μm thickness was formed.

Subsequently, the paint composition 1 was diluted with a thinner for coating ( Orga TO520c, made by Nippon Paint Co., Ltd. ) ( 13 seconds at 20 °C by #4 Ford cup ) and electrostatic spray-coating was carried out by using a spraying gun ( made by Japan Ransburg Kabushiki kaisha, REA, nozzle cap No. 6 ) ( the spraying was carried out twice having 1 minute of flashing-off time between the first and second spraying ), whereby a coating film was formed ( 15 μm when converted in to dried thickness ). Then, on wet-on-wet a clear paint ( Orga TO 4561 Clear in a group of acryl-melamine resins, made by Nippon Paint Co., Ltd. ) was applied and baked at 140°C for 20 minutes, whereby a coating product was obtained. Thickness of the whole coating film on the subtrate material was about 110 μm.

Example B

The procedure of example A was repeated except that the paint composition 2 was used instead of the paint composition 1, whereby a coating product was obtained.

Example C

The procedure of example A was repeated except that the paint composition 3 was used instead of the paint composition 1, whereby a coating product was obtained.

Example D

The procedure of example A was repeated except that the undermentioned paint composition a and then, the paint composition b were coated instead of the paint composition 1, whereby a coating product was obtained. In this coating product, a paint layer containing the lustreless color pigment was formed by the paint composition a, on which a paint layer containing the scaly brilliant color pigment was formed by the paint composition b, whereby a clear layer was formed.

The paint composition a

The first pigment solution used in said preparation of the paint composition 1 was used as the paint composition a.

The paint composition b

A pigment solution similar to the second pigment solution used in said preparation of the paint composition 1 was used as the paint composition b. However, the concentration of the brilliant color pigment was set as 6 PHR.

Example E

The procedure of example A was repeated except that the undermentioned paint composition c and then, the undermentioned paint composition d were coated with care of no formation of a clear layer instead of the paint composition 1, whereby a coating product was obtained. In this coating product, a paint layer containing the lustreless color paint was formed by the paint composition c and a clear paint layer containing the scaly brilliant pigment was formed by the paint composition d.

The paint composition c

The first pigment solution used in said preparation of the paint composition 1 was used as the paint composition c.

7

The paint composition d

The scaly brilliant color pigment, 0.6 weight parts, used in said preparation of the paint composition 1 ( Exteria Marine Bright Gold, made by Maar Corporation ) was mixed with 5.4 weight parts of toluene and to this mixture was added 72 weight parts of an acryl resin ( Daiale HR • 554, made by Mitsubishi Rayon Co., Ltd. ) and 18 weight parts of a melamine resin ( Yuban 20SE-60, made by Mitsui Toatsu Kagaku Co., Ltd. ) and the mixture thus-obtained was treated with stirring for 30 minutes using a disper to get the paint composition d.

Example for comparison

The procedure of example A was repeated except that the paint composition for camparison was used instead of the paint composition 1, whereby a coating product was obtained.

The design effects were evaluated for each coating film obtained from the examples A, B, C, D, and E and the example for comparison. As described below, visual evaluation ( looking-at with eyes ) and evaluation by a deformation color-difference meter are both carried out in order to get a comprehensive judgement.

The visual evaluation

A standard light source, a coating product ( a coated plate ), and an visual position were determined so as the angle of incidence for the standard light and a light-receiving angle by eyes were set at about 60 degrees and then, when the angle of the coating product was varied, the varying hue extent was judged visually.

The evaluation by a deformation color-difference meter

Maintaining the light-projecting angle at a constant angle of -45 degrees, when the light-receiving angle was varied between -70 degrees and +70, the evaluation was carried out with a varying extent of $[ ( a^* )^2 + ( b^* )^2 ]^{0.5}$.

Results are presented in Table 2.

Table 2

|  | Color based on lustreless pigment | Color based on brilliant pigment | Evaluation of design effect |
|---|---|---|---|
| Example A | Blue | Yellow | ◎ |
| Example B | Green | Red | ◎ |
| Example C | Blue | Yellow | ◎ |
| Example D | Blue | Yellow | ◎ |
| Example E | Blue | Yellow | ◎ |
| Example for comparison | Blue | Blue | X |
| Evaluation grade<br>◎···Excellent ○···Good<br>△···Normal X···Bad | | | |

As mentioned above, a coating film formed by the paint composition as claimed in the claim 1 or a coating film of the coating product as claimed in the claim 5 has a lustreless color pigment and a scaly brilliant color pigment, both of which are not in a similar color system, and shows hitherto-unknown variation of color tone and hue on the coating film face, and thus, a high design effect is displayed.

**Claims**

1. A paint composition comprising a resin base, about 1 to 40 parts by weight of a luster-less color pigment and about 0,1 to 25 parts by weight of a scaly brilliant color pigment,
**characterized** in that said scaly brilliant color pigment comprises scales of mica or metal covered with a covering substance and exhibiting a definite color, and that the colors of said scaly brilliant color pigment and said luster-less color pigment are selected to be different, non-similar colors.

2. A paint composition according to claim 1 wherein said covering substance on the scales of mica or metal is a colorant or a pigment.

3. A paint composition according to claim 2 wherein said covering substance is titanium dioxide.

4. A paint composition according to claim 2 wherein said covering substance comprises a layer of titanium dioxide and covered with a layer of iron oxide.

5. A coated product comprising a substrate material and a single layer or multilayer coating film formed thereon, said coating film comprising a resin base, about 1 to 40 parts by weight of a luster-less color pigment and about 0,1 to 25 parts by weight of a scaly brilliant color pigment,
characterized in that said scaly brilliant color pigment comprises scales of mica or metal covered with a covering substance and exhibiting a definite color, and that the colors of said scaly brilliant color pigment and said luster-less color pigment are selected to be different, non-similar colors,
said scaly brilliant color pigment and said luster-less color pigment being contained in the same layer or in different layers of said coating film.

**Patentansprüche**

1. Anstrichmittel-Zusammensetzung mit einer Harzgrundlage, etwa 1 bis 40 Gewichtsanteile eines matten Farbpigments und etwa 0,1 bis 25 Gewichtsanteile eines blättrigen brillanten Farbpigments,
dadurch **gekennzeichnet,** daß das blättrige brillante Farbpigment Glimmer- oder Metallschuppen umfaßt, die mit einer Abdecksubstanz bedeckt sind und eine bestimmte Farbe zeigen, und dadurch, daß die Farben der blättrigen brillanten Farbpigmente und des matten Farbpigments als unterschiedliche, nichtähnliche Farben gewählt sind.

2. Anstrichmittel-Zusammensetzung nach Anspruch 1,
bei der die Abdecksubstanz der Glimmer- oder Metallschuppen ein Farbmittel oder ein Pigment ist.

3. Anstrichmittel-Zusammensetzung nach Anspruch 2,
bei der die Abdecksubstanz Titan-Dioxid ist.

4. Anstrichmittel-Zusammensetzung nach Anspruch 2,
bei der die Abdecksubstanz eine Schicht aus Titan-Dioxid umfaßt und mit einer Schicht aus Eisenoxid bedeckt ist.

5. Beschichtetes Produkt mit einem Trägermaterial und einem ein oder mehrschichtigen, darauf ausgebildeten Überzugsfilm, wobei der Überzugsfilm umfaßt:
eine Harzgrundlage, etwa 1 bis 40 Gewichtsanteile eines matten Farbpigments und etwa 0,1 bis 25 Gewichtsanteile eines blättrigen brillanten Farbpigments,
dadurch **gekennzeichnet,** daß das blättrige brillante Farbpigment Glimmer- oder Metallschuppen umfaßt, die mit einer Abdecksubstanz bedeckt sind und eine bestimmte Farbe zeigen, und daß die Farben des blättrigen brillanten Farbpigments und des matten Farbpigments als unterschiedliche, nichtähnliche Farben gewählt sind, wobei das blättrige brillante Farbpigment und das matte Farbpigment in derselben Schicht oder in verschiedenen Schichten des Überzugfilms enthalten sind.

**Revendications**

1. Composition de peinture comprenant une base de résine, environ 1 à 40 parties en poids d'un pigment colorant mat et environ 0,1 à 25 parties en poids d'un pigment colorant brillant en paillettes,

9

caractérisée en ce que ledit pigment colorant brillant en paillettes comprend des paillettes de mica ou de métal revêtues d'une substance de revêtement et présentant une couleur définie, et en ce que les couleurs dudit pigment colorant brillant en paillettes et dudit pigment colorant mat sont choisies pour être des couleurs différentes non similaires.

2. Composition de peinture selon la revendication 1, dans laquelle ladite substance de revêtement sur les paillettes de mica ou de métal est un colorant ou un pigment.

3. Composition de peinture selon la revendication 2, dans laquelle ladite substance de revêtement est du bioxyde de titane.

4. Composition de peinture selon la revendication 2, dans laquelle ladite substance de revêtement comprend une couche de bioxyde de titane et est revêtue d'une couche d'oxyde de fer.

5. Produit revêtu comprenant un matériau formnt substrat et un film de revêtement monocouche ou multicouche formé sur lui, ledit film de revêtement comprenant une base de résine, environ 1 à 40 parties en poids d'un pigment colorant mat et environ 0,1 à 25 parties en poids d'un pigment colorant brillant en paillettes,

caractérisée en ce que ledit pigment colorant brillant en paillettes comprend des paillettes de mica ou de métal revêtues d'une substance de revêtement et présentant une couleur définie, et en ce que les couleurs dudit pigment colorant brillant en paillettes et dudit pigment colorant mat sont choisies pour être des couleurs différentes non similaires,

ledit pigment colorant brillant en paillettes et ledit pigment colorant mat étant contenus dans la même couche ou dans des couches différentes dudit film de revêtement.

# Fig. 1

# Fig. 2

# Fig. 3